# EUROPÄISCHE PATENTSCHRIFT

(11) **EP 1 712 581 B1**
(45) Veröffentlichungstag und Bekanntmachung des Hinweises auf die Patenterteilung: **29.10.2008**
(21) Anmeldenummer: 06007826.8
(22) Anmeldetag: 13.04.2006
(51) Int. Cl.: C08G 69/48, D06P 1/90, D06P 1/651

(54) **Verfahren zum Tönen bzw. Färben oder Dotieren von Formteilen**
Process for tinting, coloring or doping moulded parts
Procédé pour la coloration, la teinture ou le dopage de pièces moulées

(30) Priorität: 14.04.2005 DE 102005017321; 04.04.2006 DE 102006015721
(43) Veröffentlichungstag der Anmeldung: 18.10.2006
(73) Patentinhaber: EMS-CHEMIE AG, 7013 Domat/Ems (CH)
(72) Erfinder: Thullen, Helmut, 7402 Bonaduz (CH); Buehler, Friedrich Severin, Dr., 7430 Thusis (CH); Grand, Marcel, 7206 Igis (CH)
(74) Vertreter: Becker Kurig Straus

(56) Entgegenhaltungen:
- US-A1- 2003 084 521
- US-A1- 2004 168 268

## Beschreibung

### 1. Gebiet der Erfindung

Die vorliegende Erfindung betrifft eine neuartige Zusammensetzung von Färbebädern oder Funktionsbädern und ein Verfahren zum Tönen bzw. Färben oder Dotieren von Formteilen mit Funktionsadditiven in diesen wässerigen Tauchbädern oder Funktionsbädern. Die Formteile enthalten im wesentlichen transparente oder transluzente (Co)Polyamide. Die Temperatur der Tauchbäder bzw. Funktionsbäder liegt unterhalb der Glasumwandlungstemperatur (Tg) der (Co)Polyamide. Falls gemäß einer Ausführungsform der Erfindung die Formteile getönt bzw. angefärbt werden sollen, kann die Färbung als homogene Färbung oder als Gradientenfärbung ausgeführt werden.

Das erfindungsgemäße Verfahren ist besonders geeignet zur Herstellung von hochwertigen Gegenständen wie ophthalmische Linsen, Linsen für Sonnenbrillen, Lupen, Schaugläsern aller Art, Polarisationsfolien und Displayfolien, insbesondere, wenn veränderliche Farbtiefen (Gradienten) erzeugt werden sollen.

Diese Erzeugung eines Farbgradienten erfordert das Einfärben in einem Tauchverfahren, wobei die örtlich gewünschte Farbtiefe durch verschieden lange Tauchzeiten der Oberflächenbereiche der Formkörper im Farbbad erreicht wird.

Mit Hilfe von Tauchbad-Zusätzen von einer geeigneten Kombination von Glykolen und einem speziellen Tauchverfahren werden homogene Farbverteilungen im Formteil bzw. in einem Werkstoffverbund, enthaltend dieses Formteil, erhalten, wobei tiefe Haze-Werte (Trübungswerte) ≤ 1 % bei Farbtiefen von 10 - 93 % Lichttransmission, bevorzugt 10 - 80 % Lichttransmission, besonders bevorzugt 10 - 60 % Lichttransmission erreicht werden, wobei eine hochglänzende einwandfreie Oberfläche des Formteils erhalten bleibt.

Mit Hilfe von geeigneten Grundfarben können alle Farbtöne bis grau eingestellt werden. Gleichzeitig wird ein prozesstaugliches Farbbad erhalten, das mindestens eine Woche stabil ist.

Die erfindungsgemäß eingefärbten Formteile oder Werkstoffverbunde können ohne Ausbluten der Farbe in üblichen Tauchbädern mit Primem und Hartlack überzogen werden, die thermisch oder mit UV-Strahlung ausgehärtet werden. Ebenso können Schichten zur Antireflexausrüstung oder Antibeschlagausrüstung aufgetragen werden. Die Haftung dieser Schichten wird nicht beeinträchtigt. Es können nach der Tauchfärbung auch Polarisationsfolien aufgeklebt werden, die danach mit Hardcoat und Antireflexschichten und oder Antibeschlagschichten veredelt werden.

Mit dem erfindungsgemäßen Verfahren ist es aber ebenfalls möglich, in Formkörper, wie z. B. Folien, Funktionsadditive wie UV-Additive, photochrome oder thermochrome Additive, oder kontrastverstärkende Additive oder Additive, die den Brechungsindex beeinflussen, einzudotieren. Das erfindungsgemäße Verfahren eignet sich insbesondere zum Einfärben von einlagigen Gießfolien und auch für empfindliche komplizierte Schichtaufbauten wie beispielsweise für Displays von TFT-Bildschirmen. Die Veredelung der fertig ausgerüsteten Mehrschichtfolie mit Hartlacken, Entspiegelungen, Antireflexschichten und oder wasserabweisenden Schichten und oder Antibeschlagschichten funktioniert in gleicher Weise, d. h. in wässerigen Tauchbädern.

Die Erfindung betrifft daher auch mit dem zuvor genannten Verfahren herstellbare getönte bzw. gefärbte oder dotierte Formteile. Die erfindungsgemäßen Formteile können auch mit wenigstens einer transparenten oder transluzenten Oberflächenschicht oder mit Dekorfolien, Funktionsfolien oder Lacken oder Kunststoffen verbunden sein, so dass sich ein Werkstoffverbund ergibt, der ebenfalls mit dem Verfahren getönt bzw. gefärbt oder dotiert werden kann.

Die vorliegende Erfindung betrifft ein getöntes bzw. gefärbtes oder dotiertes Formteil, herstellbar gemäß dem erfindungsgemäßen Verfahren.

Die vorliegende Erfindung betrifft ein Formteil, wobei es mit wenigstens einer transparenten oder transluzenten Oberflächenschicht und/oder mit Dekorfolien, Funktionsfolien oder Lacken oder Kunststoffen oder anderen Kunststoffen verbunden ist und einen Werkstoffverbund ergibt, der mit dem Verfahren gemäß einem der Ansprüche 1 bis 29 getönt bzw. eingefärbt oder dotiert worden ist.

Die vorliegende Erfindung betrifft ein Formteil oder einen Werkstoffverbund, wobei es oder er für optische Bauteile wie ophthalmische Linsen oder Sonnenlinsen für Brillen, Lupen, Linsensysteme, Mikroskope, Kameras, Displays für Handys, Kameralinsen, Messinstrumente, Uhrengläser oder Uhrengehäuse, Gehäuse für tragbare Telefone mit oder ohne integrierte Displays oder Apparate jeder Art und für CD's, DVD's, Linsen für LED's, Lichtwellenleiter, Lichtkoppler, -Verstärker, Verteiler und Scheiben für Lampen und Lasergeräte, Verbundfolien, Verbundbehälter, und transparente Verbunde aller Art eingesetzt wird.

Die vorliegende Erfindung betrifft ein Formteil, wobei es für Display- oder Bildschirmfolien, die anschließend zu mehrschichtigen Displayfolien laminiert sein können, verwendet wird.

Die vorliegende Erfindung betrifft ein Formteil, wobei es für Schalterelemente und Heizungs-/Lüftungsblenden in der Automobilindustrie oder im Bereich der Haushaltswaren und der Telekommunikation, als elektrolumineszierende Folie verwendet wird.

### 2. Hintergrund Stand der Technik

Transparente Werkstoffe wie Polymethylmethacrylat (PMMA), Polycarbonat (PC) und (Co)Polyamide (PA) werden zunehmend für hochwertige Anwendungen wie beispielsweise optische Linsen oder Linsen für Sonnenbrillen oder Compact Disc, Schaugläser, Lampengehäuse, Displays oder Durchflussmesser eingesetzt.

Transparente Polyamidwerkstoffe zeichnen sich durch ihre geringe Dichte, eine hohe chemische Beständigkeit, eine ausgezeichnete dynamische Belastbarkeit und Zähigkeit, auch bei der mechanischen Bearbeitung aus. Transparente Polyamide werden zum Beispiel in EP-A-1 369, 447 und EP-A-0725 101 beschrieben. Ferner können Brechungsindizes n_{D}²⁰ bis 1,65 über die Wahl der Monomere eingestellt werden. Derartige Polyamide beschreibt EP-A-1 397 414.

Weitere Eigenschaftsverbesserungen von transparenten Polyamidwerkstoffen können durch das Herstellen von transparenten Polyamidmischungen aus amorphen, transparenten und oder mikrokristallin transparenten und/oder teilkristallinen Polyamiden erzielt werden. Zusammensetzungen transparenter Polyamidblends sind beispielsweise EP-A-1 130 059 zu entnehmen.

Cycloaliphatische transparente Polyamidwerkstoffe und deren transparente Blends mit bis zu 60 % teilkristallinen, aliphatischen Polyamidwerkstoffen zeichnen sich insbesondere durch eine ausgezeichnete UV-Stabilität des Werkstoffes selbst aus. Alle transparenten Polyamidwerkstoffe können durch UV-Sabilisatoren wie HALS-Stabilisatoren, z.B. Nylostab SEED, Tinuvin 770 oder UV-Absorber wie beispielsweise Tinuvin 360, Tinuvin 320, Tinuvin 312, in ihrer Lichtbeständigkeit verbessert werden. Für die Stabilisierung gegen Wärmeeinflüsse zeigen substituierte tertiäre Butylphenole und dessen Derivate wie beispielsweise Irganox 1010, Irganox 1070 oder Irganox 1098 gute Resultate. Zum Ausgleich des Gelbstichs, der durch das Polyamid selbst oder durch Stabilisatoren verursacht wird, werden optische Aufheller wie beispielsweise Uvitex OB oder Tinopal DMS-X oder andere eingesetzt. Optische Aufheller können durch blaue oder violette Farbstoffe ergänzt oder ersetzt werden.

Für transparente Werkstoffe in Außenanwendungen wird zunehmend Undurchlässigkeit für schädigende UV-Strahlung unter 430 nm, besonders unter 400nm und unter 385 nm verlangt. Das gelingt durch Einarbeiten von üblichen UV-Absorben, insbesondere mit Chlor aktivierten Benztriazolen wie beispielsweise Tinuvin 326, Tinuvin 327 oder Derivaten davon. Bewährt haben sich auch Mischungen mit Hals-Typen. Die Kombination von optischen Aufhellern und UV-Absorbern führt zu verbessertem Aussehen der Formteile mit gleichzeitiger Schutzwirkung gegen schädigende UV-Strahlung.

Da verschiedene UV-Schutzklassen am Markt gefordert werden, ist es vorteilhaft, den UV-Schutz über einen geeigneten Masterbatch direkt vor der Formteilherstellung dazuzugeben. Je nach Menge des UV Masterbatches kann die Lichttransmission für die Schutzklasse 385 nm, 400 nm oder höhere direkt eingestellt werden.

Bekannte Färbeprozesse aus der Textilindustrie für Polymere arbeiten mit wässerigen Systemen,
wobei die Färbetemperatur so gewählt wird, dass sie zwischen Schmelzpunkt und Tg des zu färbenden Materials liegt.

Transparente, amorphe Werkstoffe können aber nur in Tauchbädern mit Temperaturen unterhalb des Glasumwandlungspunktes (Tg) gefärbt werden, da sie sonst ihre Form verlieren.

Für das bekannte Linsenmaterial auf Basis von reaktiv vernetztem Allyldiglykol-Carbonat mit Handelsnamen CR 39 stehen geeignete Färbebäder zur Verfügung, die aber für transparente Polyamide nicht geeignet sind, da sie zu Rissbildung und Eintrübung führen, sodass dass gefärbte Polyamid für eine Linsenanwendung nicht mehr geeignet ist.

US-A-5,453,100 beschreibt das Färben von Polycarbonatmaterialien mit Farbstoffen durch Eintauchen in ein Gemisch aus Farbstoff oder Pigment, welches in einer Lösungsmittelmischung aufgelöst ist. Das Lösungsmittelgemisch enthält Substanzen, welche ausgewählt sind aus Dipropylenglykolmonomethylether, Tripropylenglykolmonomethylether und Propylenglykolmonomethylether.

US 2004/016826 A1 beschreibt ein Verfahren zum Färben und Tönen in einem Farbbad, wobei das Farbbad enthält:
50 bis 90 Gew.-% Wasser,
0,1 bis 15 Gew.% Farbstoff,
2,5 bis 20 Gew.-% eines Plastifizierungsmittels der allgemeinen Formel

   R'―[(O(CH₂)ₘ)ₙ―]OH,
wobei R' Ethyl, Propyl oder Butyl ist, m 2 bis 4 ist und n 1 bis 3 ist, und 5 bis 30 Gew.-% mindestens eines Egalisiermittels der allgemeinen Formel

H―[(O(CH₂)ₘ)ₙ―]OH,

wobei m 2 bis 4 ist und n 1 bis 3 ist.

US 2004/0168268 A1 beschreibt im übrigen auch nicht die Verwendung eines Puffers sowie nicht die Verwendung von oberflächenaktiven Substanzen. Zwar kann das Farbbad gemäß US 2004/0168268 A1 auch Diethylenglykol oder Triethylenglykol enthalten; diese Komponenten werden jedoch in Mengen von 5 bis 30 Gew.-% eingesetzt.

In US-A-6,749,646 wird eine Färbemethode für Polycarbonat, Polyesterpolycarbonat Copolymere, SAN, ABS, ASA, Polyamid, Polyurethan oder Blends davon beschrieben, die das Einstellen eines Farbgradienten erlaubt. Beispiele und Resultate beziehen sich ausschließlich auf Polycarbonat.

Das Farbbad besteht aus 94 bis 96 Gew.% Wasser, mit 0,1 bis 15 Gew.-% Farbstoffen und 1 bis 2 Gew.-% Träger (Carrier). Optional können 3 bis 4 Gew.-% eines Tensides eingesetzt werden. Als Farbstoffe werden wasserunlösliche Farbstoffe mit Azo-Gruppen, Diphenylamin und Anthrachinon-Zubereitungen vorgeschlagen. Die Farbstoffe werden zuerst in einem Carrier und /oder Tensid gelöst und dann dem Wasser zugegeben. Als bevorzugte Carrier werden Verbindungen gemäss folgender Formel beansprucht:

R1 [-O-(CH₂)ₙ]ₘOR₂

wobei R₁ und R₂ unabhängig voneinander H oder C₁-C₁₈ alkyl-, benzyl-, benzoyl oder phenyl-Radikale sein können mit n 1 oder 2 und m 2 bis 35. Optional werden Tenside vorgeschlagen, die ionisch, amphoter oder nicht ionisch sein können.

Zur Herstellung des Farbbades werden Farbstoff und Carrier gemischt und optional ein Tensid zugegeben. Im zweiten Schritt wird das Wasser dazugegeben.

Das Färbeverfahren gemäß US 6,749,646 besteht aus folgenden Schritten:
a. Herstellung des Farbbades
b. Aufheizen auf 90 bis 99 °C und Eintauchen des Formteils
c. Halten des Formteils im Bad bis die gewünschte Farbtiefe erreicht ist
d. Ausziehen des Formteils aus dem Bad.

US 6,749,646 B2 offenbart nicht die Eignung der Methode und der Badzusammensetzung für Polyamide, insbesondere für transparente Polyamide. Im Falle der erwähnten transparenten Polyamide bietet die Lehre der US 6,749,646 B2 keine Information, welches Färbe-System aus den zahlreichen Möglichkeiten angewendet werden soll, so dass die Auswahl des geeigneten Systems und der drei Komponenten Farbe, Carrier, Emulsifier umfangreiche Versuche erfordert.

Im Beispiel selbst wird darauf hingewiesen, dass die Vorschrift der Farbzugabe und der Mischung Carrier mit Tensid (Levegal, Product von Bayer) auch für Polycarbonat noch optimiert werden muss. Falls diese Optimierung nicht durchgeführt wird, nimmt das Formteil infolge mangelhafter Benetzung zu wenig Farbe auf.

Damit bleibt dem Fachmann lediglich die Möglichkeit für jeden Polymertyp durch eigene Versuche die richtige Methode selbst zu entwickeln.

### 3. Aufgabenstellung der vorliegenden Erfindung

Die Aufgabe der vorliegenden Erfindung ist es Zusammensetzungen von wässerigen Färbebädern und ein Färbeverfahren für Formteile aus transparenten Polyamiden vorzuschlagen, bei dem die Färbebäder mindestens eine Woche stabil bleiben, ohne dass die Komponenten ausfallen oder sich der Farbton der gefärbten Formkörper ändert, die Oberfläche der Formteile in ausgezeichneter Qualität erhalten bleibt, eine Gradientenfärbung möglich ist und gleichzeitig eine so feste Anbindung des Farbstoffs an das Polymer erreicht wird, dass ein Ausbluten in nachträglichen Behandlungsschritten vermieden wird. Insbesondere soll auch ein Verfahren gefunden werden, welches eine schnellere Färbung erlaubt.

Diese Aufgabe wird durch das Funktionsbad gemäß Anspruch 1 sowie durch das Verfahren gemäß Anspruch 4 gelöst. Weiterhin wird die Aufgabe durch die gefärbten Formteile gemäß Anspruch 21 gelöst.

In den Unteransprüchen werden vorteilhafte Ausführungsformen der Erfindung beschrieben.

### 4. Beschreibung der Erfindung

Die Erfindung betrifft daher ein Funktionsbad zum Färben oder Dotieren von Formteilen, bestehend aus folgenden Komponenten :

| | | |
|---|---|---|
| A) | deionisiertem Wasser | |
| B) | (Träger) Carrier | 0,10 - 6,00, bevorzugt 1,00 - 4,00, besonders bevorzugt 1,00 - 3,00 Gew.-%, |
| C) | Tenside/Emulgator | 0,001 - 1,00, bevorzugt 0,001 - 0,50, besonders bevorzugt 0,001 - 0,30 Gew.-%, |
| D) | Oberflächenaktive Substanz D | 0,50 - 4,00, bevorzugt 1,00 - 3,00Gew.-%, |
| E) | Oberflächenaktive Substanz E | 0,01 - 3,00, bevorzugt 0,01 - 2,00, besonders bevorzugt 0,05 - 1,00, ganz besonders bevorzugt 0,05 - 0,20 Gew.-%, |
| F) | Farbstoffe oder Dotierungsmittel | 0,01 - 0,90, bevorzugt 0,01 - 0,40, besonders bevorzugt 0,01 - 0,20 Gew.-%, |
| G) | Puffer | 0 - 3,00, bevorzugt 0 - 2,0, besonders bevorzugt 0 - 1,0 Gew.-%, |
| und gegebenenfalls | | |
| H) | Dispersionsmittel für Farbstoffe oder Dotierungsmittel (F) 0 - 4,00, bevorzugt 0 - 3,00, besonders bevorzugt 0 - 2,00 Gew.-% auf der Basis einer anionischen Zubereitung aus ethoxylierten Fettamin-Estern, Aralkylpolyglykolether und einem modifizierten Polyalkohol. | |

Die Mengen der verwendeten Komponenten addieren sich zu 100 Gew.-%.

Das deionisierte Wasser A) kann mittels Destillation oder Ionenaustauscher hergestellt werden.

Der Carrier B) besteht aus wenigstens einem Monohydroxyglykol der allgemeinen Formel (1):

R¹-{[-O-(CH₂)ₙ]ₘ}OR²

worin n = 2 bis 18, m = 1 bis 4, R¹ = H und R² = ein Alkylrest mit C₁₋₁₈, ein Benzyl-, ein Benzoyl- oder ein Phenyl-Rest ist, wobei der aromatische Ring mit Alkyl oder Halogen substituiert sein kann.

Die Komponente C) Tensid/Emulgator ist ausgewählt aus der Gruppe, bestehend aus ionischen Tensiden/Emulgatoren, nichtionischen Tensiden/Emulgatoren und amphoteren Tensiden/Emulgatoren.

Die oberflächenaktive Substanz D) besteht aus wenigstens einem Glykol mit zwei aliphatischen oder aliphatisch-aromatischen Endgruppen der allgemeinen Formel (2):

R¹-{[-O-(CH₂)ₙ]ₘ}OR²

worin n = 2 bis 18, m = 1 bis 6, R¹ und R² gleich oder verschieden sind und ein H, ein Alkylrest mit C₁₋₁₈, ein Benzyl-, ein Benzoyl- oder ein Phenyl-Rest sein können, wobei der aromatische Ring mit Alkyl oder Halogen substituiert sein kann.

Die oberflächenaktive Substanz E) besteht aus wenigstens einem Polyalkylenglykol der allgemeinen Formel (3):

R¹-{[-O-(CH₂)ₙ]ₘ}OR²

worin R¹ und R² = H mit n = 2 - 4 und m = 6 - 35 sein kann.

Die Komponente F) ist ausgewählt aus der Gruppe bestehend aus der Gruppe der wasserlöslichen Dispersionsfarbstoffe und/oder der Gruppe der wasserlöslichen Säurefarbstoffe oder der Gruppe der Dotierungsmittel.

Mit dem Puffer G) ausgewählt aus der Gruppe der Puffersubstanzen und/oder aliphatischen Carbonsäuren und/oder Ammoniumverbindungen und/oder Phosphaten wird ein pH-Wert von 3,5 ― 7, bevorzugt von 4 - 6 eingestellt.

Die Komponente H) kann optional dem Funktionsbad zugegeben werden. Es handelt sich um ein spezielles Dispersionshilfsmittel für Dispersionsfarbstoffe und Dotierungsmittel und wird im Handel unter der Bezeichnung Univadine Top (Ciba Spezialitätenchemie, Schweiz) angeboten. Dieses Dispersionshilfsmittel (H) ist eine anionische Zubereitung aus ethoxylierten Fettamin-Estem, Aralkylpolyglykolether und einem modifizierten Polyalkohol. Gemäß dem Sicherheitsdatenblatt von Univadine Top besteht die Zusammensetzung aus folgenden Bestandteilen:
3 - 7 % 2,4,6-Tristyrylphenol, ethoxyliert mit der IUPAC-Bezeichung alpha-(2,4,6-tris(2-phenylvinyl)phenyl)-omega-hydroxypoly(oxy-1,2-ethandiyl),
> 30 % 2,4,6-Tristyrylphenol, ethoxyliert, phosphatiert, Triethanolamin-Salz mit der IUPAC-Bezeichung Ethanol, 2,2',2"-nitrilotris-, Reaktionsprodukt mit alpha-(2,4,6-tris(2-phenylvinyl)phenyl)-omega-hydroxypoly(oxy-1,2-ethandiyl)phosphat und 7 % 2-Methyl-2,4-pentandiol.

Durch diese besondere erfindungsgemäße Badzusammensetzung mit den Komponenten A) bis H) wird überraschenderweise eine schnellere Färbung, nämlich schon in 4 Minuten statt üblicherweise in 30 Minuten erzielt.

Die Tauchbäder zum Vor- bzw. Nachbehandeln und Abkühlen des Formteils bestehen aus deionisiertem Wasser, gegebenenfalls werden 0,001- 1,00 Gew.-% Tenside/Emulgator zugegeben.

Die Formteile bestehen aus transparenten und transluzenten Polyamiden wie sie in EP-A-0 725 101, EP-A-1 369 447, EP-A-1 397 414 und EP-A-1 130 059 beschrieben sind.

Bevorzugt sind dabei transparente, amorphe oder mikrokristalline Polyamide oder deren transparente Blends (Mischungen). Sie können auch als transparente Blends mit teilkristallinen Polyamiden wie beispielsweise PA12, PA11, PA6, PA1212, PA612 vorliegen.

Bevorzugte amorphe oder mikrokristalline (Co)Polyamide weisen folgende Zusammensetzungen auf:
PA 6I, PA 6I/6T, PA MXDI/6I, PA MXDI/MXDT/6I/6T, PA MXDI/12I, PA MACMI/12, PA MACMI/MACMT/12, 6I/MACMI/12, PA 6I/6T/MACMI/MACMT/12, PA PACM6/11, PA PACM12, PA PACMI/PACM12, PA MACM6/11, PA MACM12, PA MACMI/MACM12, PA MACM12/PACM12, PA 6I/6T/PACMI/PACMT/PACM12/612.

Zur Herstellung des Funktionsbades wird die Komponente A) vorgelegt und die anderen Komponenten unter Rühren eingemischt.

Das Funktionsbad wird indirekt beheizt, da es bei direkt beheizten Bädern zu Überhitzungen im Bereich der Badwand kommen kann, wodurch die Stabilität des Bades negativ beeinflusst wird. Die erfindungsgemäße Methode verwendet indirekt beheizte Bäder mit Doppelwand und beispielsweise Wasser als Wärmeträgermedium. Im Innenraum umgeben vom Wärmeträger befindet sich die Färbe/Dotierungsflotte. Der Wärmeträger wird entweder umgewälzt oder gerührt. Die Flotte wird ebenfalls umgewälzt oder gerührt. Im Laborversuch werden vorteilhaft zwei ineinandergestellte Bechergläser verwendet, wobei beide Gefäße durch zwei Magnete über einen Magnetrührer mit Heitzplatte gerührt werden. Diese Art der Vorrichtung führt zu wesentlich höherer Badstabilität gegenüber direkt beheizten Bädern. Der Wärmeträger gleicht die Temperaturgradienten aus und verhindert Überhitzung.

So behandelte Bäder können mehrfach auf Raumtemperatur abgesenkt und wieder auf Betriebstemperatur gebracht werden.

Die Tauchbäder zum Vor- bzw. Nachbehandeln des Formteils können sowohl direkt als auch indirekt beheizt sein.

Grosse Temperaturdifferenzen zwischen Formteil und Behandlungsbad erzeugen unbefriedigende Resultate des jeweiligen Behandlungsschrittes, da an der Oberfläche des Formteils ständig veränderte Bedingungen vorliegen bis das Formteil die Badtemperatur erreicht.

Alle Bäder werden bei einer Temperatur zwischen 50 und 95 °C betrieben, mit Ausnahme des Nachbehandlungsbades, bei dem die Temperatur 30 bis 60 °C beträgt und des Abkühlbades, welches Raumtemperatur besitzt.

Die Erfindung betrifft weiterhin die Verwendung des Funktionsbads in einem Verfahren zum Tönen bzw. Färben oder Dotieren von Formteilen aus transparenten Polyamiden, welches folgende Schritte umfasst:
a) Herstellen der Tauchbäder
b) Aufheizen der Tauchbäder
c) Vorbehandeln des Formteils
d) Färben oder Dotieren des Formteils
e) Nachbehandeln des Formteils
f) Abkühlen des Formteils
g) Trocknen des Formteils

Das Verfahren zum Färben oder Dotieren des Formteils im erfindungsgemäß hergestellten Funktionsbad ist gekennzeichnet durch eine Vorbehandlung und eine Nachbehandlung des zu färbenden Formteils.

In der Vorbehandlung wird das Formteil gereinigt und auf die Temperatur des Funktionsbades gebracht. Erreicht die Formteiltemperatur die Temperatur des Funktionsbades wird es aus dem Vorbehandlungsbad herausgezogen und sofort in das Funktionsbad eingetaucht, in dem es 5 bis 60 min verbleibt. Im Nachbehandlungsbad wird das Formteil von überschüssiger FärbeDotierungsflotte gereinigt, bevor es im Abkühlbad auf Raumtemperatur abgekühlt wird. Am Schluss wird das Formteil an der Luft oder z .B. in einem schwachen Warmluftstrom getrocknet.

In einer besonderen Ausführungsform des erfindungsgemäßen Verfahrens kann bei der Nachbehandlung ein Bad verwendet werden, welches ein Tensid, z. B. Natrium-Laurylsulfonat enthält. Das Formteil wird dann in diesem Bad mit Ultraschall gereinigt, mit destilliertem Wasser abgespült und an der Luft getrocknet.

Folgen weitere Veredlungsschritte ist es Vorteilhaft das Formteil immer auf die jeweilige Badtemperatur vorzuwärmen, in dem der nächste Behandlungsschritt erfolgt. Das erfindungsgemäße Verfahren führt zu deutlich besseren Resultaten gegenüber einem Verfahren bei dem das Formteil mit Raumtemperatur in das Farbbad eingetaucht wird.

Weiterhin können erfindungsgemäß weitere Nachbehandlung des fertig ausgerüsteten Formteils, z.B. Linsen oder Mehrschichtfolien, auch Displayfolien für TFT-Bildschinne, durch Aufbringen von wenigstens einer Hartlackschicht und/oder einer Entspiegelungsschicht und/oder einer Antireflexschicht und/oder von wasserabweisenden Schichten und/oder Antibeschlagsschichten durchgeführt werden, wobei insbesondere in nachfolgenden Bädern Hartlackschichten mit oder ohne Primerschichten und/oder Antireflexschichten aufgebracht werden. Diese Bäder basieren meist auf wässerigen und organischen Lösungsmitteln wie beispielsweise Butanol und es können reaktive Substanzen wie beispielsweise Isocyante enthalten sein.

Auf das Formteil können weitere Funktionsschichten durch Sputter- oder Bedampfungsverfahren aufgebracht werden.

Als Carrier B) besonders geeignete Monohydroxyglykole sind z. B.
Ethylenglykolmonobutylether oder Diethylenglykolmonobutylether.

Als Tensid/Emulgator C) bevorzugt sind anionische Tenside wie Seifen, Alkylbenzolsulfonate, Alkansulfonate, Alkylsulfonate, Alkylethersulfonate, kationische Tenside wie quartäre Ammoniumverbindungen mit einer oder zwei hydrophoben Gruppen, Salze langkettiger primärer Amine, nichtionische Tenside wie Fettalkoholethoxylate, Alkylphenolethoxylate, Sorbitanfettsäureester, Alkylpolyglykoside, N-Methylglucamide, amphotere Tenside wie N-Acylamidobetaine, N-Aminoxide.

Besonders bevorzugt verwendet werden Seifen, wie beispielsweise Natriumlaurylsulfat oder Sulfonate.

Als oberflächenaktive Substanz D) besonders geeignete Glykole sind solche der Formel (2) mit n= 2 bis 4, besonders bevorzugt sind Diethylenglykol oder Triethylenglykol, Tetraethylenglykol, Pentaethylenglykol, Hexaethylenglykol, noch mehr bevorzugt sind Diethylenglykol oder Triethylenglykol.

Als oberflächenaktive Substanz E) besonders geeignet sind Polyethylenglykole mit einer Molmasse von 280 bis 1600 g/mol, besonders bevorzugt mit einer Molmasse von 280 bis 600 g/mol, noch bevorzugter mit einer Molmasse von 400 g/mol. Solch ein Produkt mit einer Molmasse von 400 g/mol ist unter der Bezeichnung Polyethylen 400 bzw. PEG 400 (Fluka) erhältlich.

Dispersionsfarbstoffe können Azo-, Anthrachinon-, Chinophtalon-, Methin-, Naphtol-, Naphthalamid, Naphthachinon oder Nitrofarbstoffe enthalten und zeichnen sich dadurch aus, dass sie eine geringe Wasserlöslichkeit haben und im wässrigen Färbebad als Dispersion vorliegen. Hierzu werden diese Farbstoffe nach der Synthese gegebenenfalls einer Nachbehandlung unterzogen durch Vermahlen zu einer Partikelgrösse < 1 µm, um Farbstärke und -homogenität zu verbessern und die geringe Wasserlöslichkeit zu erreichen. Die Vermahlung geschieht in wässeriger Aufschlämmung mit Dispergierhilfsmitteln wie z. B. Ligninsulfonaten, Kondensationsprodukten aus Naphthalin. Schwefelsäure und Formaldehyd, Kondensationsprodukten von Ortho-und Metakresol und 2-Hydroyynaphthalin-6-sulfonsäure, oder Mischungen dieser Produkte. Dispersionsfarbstoffe sind z. B. unter dem Handelsnamen Terasil® (Ciba Spezealitäten-Chemie), Bemakron® (Bezema) oder Foron® (Clariant) erhältlich. Als besonders geeignet haben sich Foron-Typen erwiesen, um genügend Farbtiefe erzielen.

Es können auch Säurefarbstoffe eingesetzt werden. Säurefarbstoffe sind anionische Farbstoffe und können Azo-, Anthrachinon, Chinophtalon-, Tripohenylmethan- und Nitrogruppen enthalten. Sie liegen meist als Na-Salze vor und sind wasserlöslich.

Farbstoffe aus der Gruppe der Säurefarbstoffe sind unter den Handelsnamen Bezanyl (Bezema), Tectilon (Ciba Spezialitäten-Chemie) oder Nylosan (Clariant) erhältlich.

Unter Dotierung wird die Verwendung des Funktionsbades als Transportmittel verstanden, um Dotierungsmittel, wie Funktionsadditive, z.B. laseraktivierbare Stoffe, elektronenreiche Substanzen, photochrome oder thermochrome Additive, andere temperaturempfindliche Substanzen, Kontrast verstärkende Additive, optische Funktionsadditive oder Sicherheitsmerkmale in das Formteil einzulagern. Bevorzugte Dotierungsmittel sind Silbernitrat, Bleitetraalkyle oder Jod.

Bei Verwendung von Silbernitrat oder Bleitetraalkylen muss das Formteil noch im Salzsäure- oder Schwefelwasserstoffdampf nachbehandelt werden. Diese Methode eignet sich zum Beispiel zum Einstellen des Brechungsindexes und Abbe Zahl.

Bei Verwendung von Laseraktiven Substanzen zur Beschriftung oder Markierung an der Oberfläche oder nach dem Überspritzen im Inneren des Formteils oder für spätere Fügemethoden muss das Formteil nachträglich mit Laserlicht bestrahlt werden.

Die optischen Funktionsadditive eignen sich besonders für Displays, Filter, Flachbildschirme oder ähnliche Anwendungen.

Mögliche Sicherheitsmerkmale können beispielsweise Stoffe sein, die durch Einwirkung von schädlicher Strahlung wie UV oder radioaktive Strahlung eine optische Veränderung des bestrahlten Gebietes verursachen. Dieser Effekt kann auch zur Herstellung lithografischer Folien genutzt werden.

Für den Puffer G) bevorzugte Puffersubstanzen oder Ansäuerungsmittel sind Sörensenpuffer, Acetatpuffer, Ammoniumacetat, Ammoniumsulfat, Natriumacetat, Natriumsulfat oder Dihydrogenphosphat bzw. Hydrogenphosphat des Kaliums, Natriums oder Ammoniums, besonders bevorzugt sind Ammoniumacetat, Ammoniumsulfat oder Kaliumdihydrogensulfat.

Als aliphatische Carbonsäuren sind solche mit 1 - 3 C-Atomen bevorzugt, besonders bevozugt sind Ameisensäure oder Essigsäure.

Puffer werden zugesetzt, um den pH-Wert des Färbe- oder Dotierungsbades in einem engen pH-Bereich stabil zu halten, z.B. bei Verwendung von pH empfindlichen Farbstoffen, wie beispielsweise Dispersionsfarbstoffen bzw. Funktionsadditiven.

Von besonderer Bedeutung bei dem erfindungsgemäßen Verfahren ist die Kombination des/der Carrier, der oberflächenaktiven Substanzen D) und E) und die Wahl der Färbetemperatur, um Trübung, Inhomogenitäten oder Risse an der Formteil-Oberfläche zu vermeiden.

Die erfindungsgemäße Färbemethode kann auf der gesamte Formteiloberfläche angewendet werden oder nur lokal, wenn die Oberfläche mit lithografischen Lacken oder Matrizen abgedeckt wird. Die zu transportierenden Stoffe können so ausgewählt werden, dass die Hafteigenschaften an den benetzten Stellen gegenüber den abgedeckten Stellen verändert werden. Dadurch werden Druckwalzenbeläge für die Druckerei möglich, die die hohen Abriebfestigkeiten von beispielsweise Polyamid 1 und 2 (Beispiel 1, 2) nutzen.

Die vorliegende Erfindung betrifft weiterhin ein Verfahren, wobei die zur Herstellung des Formkörpers verwendeten transparenten Formmassen bereits Additive aus der Gruppe der Hitzestabilisatoren, der UV-Stabilisatoren, der optischen Aufheller, der Gleitmittel, der Farbstoffe, der Mittel zur Antibeschlagausrüstung, der Phosphorverbindungen, der Metallflitter, der Schlagzähmodifikatoren, der nanoskaligen Funktions- und oder Füllstoffe, oder der Verstärkungsstoffe oder der Mischungen daraus, und der Gruppe der Fremdpolymere oder der Gruppe der thermotropen- oder thermochromen Additive, die temperaturabhängig oder abhängig von der Wellenlänge des eingestrahlten Lichtes den Farbton ändern, enthalten, wobei bevorzugt die Additive den Formmassen durch Einarbeiten eines entsprechenden Masterbatches zugesetzt werden können.

Erfindungsgemäß wird die UV-Ausrüstung der Formmassen zur Herstellung der Formkörper über die Einarbeitung von 2 bis 10 Gew.-% des entsprechenden Masterbatches vor der Formteilherstellung durchgeführt. Der Masterbatch enthält 5 bis 20 Gew.-% mindestens eines UV-Stabilisators. Von großer Bedeutung dabei ist die Qualität der Verteilung des Masterbatches in der Polymerschmelze, das Vermeiden von Ablagerungen auf der Schnecke und im Werkzeug.

Als Masterbatch wird ein Masterbatch eingesetzt dessen Trägermaterial aus dem Hauptmaterial der Formmasse für das Formteil und zusätzlich 5 bis 50 Gew.-% eines tieferschmelzenden, teilkristallinen, in der Hauptkomponente löslichen, d.h. verträglichen Kunststoffs mit einem Schmelzpunkt unterhalb des Tg der Hauptkomponente besteht. Bei dem tiefschmelzenden Kunststoff handelt es sich bevorzugt um (Co)Polyamide.

Diese tieferschmelzende Komponente enthält vorteilhaft die nach Stand der Technik üblichen optischen Aufheller und gewährleistet dessen schonende Einarbeitung und gute Dispergierung. Typische Zugabemengen dieses Masterbatches zur Hauptkomponente des Formteils liegen zwischen 2 und 10 Gew.-%. Dieser Masterbatch unterstützt den Herstellprozess des Formteils durch verbesserte Fliessfähigkeit positiv und verbessert die Bruchsicherheit des Formteils.

Die erfindungsgemäße Färbemethode eignet sich sowohl zur Einfärbung von ophthalmischen (optischen) Linsen als auch von Sonnenlinsen aus Polyamid.

Sie eignet sich besonders zum Einfärben von optischen Polyamidlinsen, die auf Dioptrien gefräst und poliert werden und damit gegenüber einer durch Spritzgießverfahren hergestellten Linse eine veränderte Oberfläche aufweisen. Die zusätzlichen Komponenten in der erfindungsgemäßen Färbemethode Triethylenglykol und Polyethylenglykol glätten solche Oberflächen wieder. Eine besondere Eignung zur Herstellung von optischen Linsen zeigt das Polyamid 4 (Beispiel 4) mit hoher Härte und hohem Brechungsindex.

Die erfindungsgemäße Färbemethode erlaubt insbesondere für Polyamid 1 und Polyamid 2 (Beispiel 1 und 2) mit den besonderen Eigenschaften Tieftemperaturzähigkeit und dynamische Wechselbiegefestigkeit die Einfärbung von fertigen Brillen. Polyamid 1 und Polyamid 2 erfüllen die Anforderungen zur Herstellung von Linsen und von Brillenrahmen und können sogar vollständig mit Gläser im Spritzgießverfahren hergestellt werden. Die gesamte Brille kann nach der erfindungsgemäßen Färbemethode homogen oder mit Farbgradienten oder mit verschiedenen Farben eingefärbt werden, ohne die hohen mechanischen Forderungen an den Rahmen zu schwächen.

Die erfindungsgemäße Färbemethode beeinflusst die mechanischen Schutzfunktionen für Linsen und Sicherheitslinsen wie Bruchsicherheit, beispielsweise gemessen nach dem Schusstest nach ANZI 87 nicht negativ und erreicht Werte wie vor der Einfärbung im erfindungsgemäßen Funktionsbad.

Die erfindungsgemäße Färbemethode ist sehr schonend, sie erlaubt auch Tauchfärbungen von bereits mit Polfolien laminierten oder hinterspritzten Verbunden, die sehr dünne empfindliche Schichtaufbauten besitzen und eine lediglich bis 90 °C stabile Polarisationsschicht auf der Basis von orientierten, Jod-Dotierten Polyvinylalkoholfolien als Polarisator-Innenschicht besitzen, die eine Polyamid, Polycarbonat oder PMMA Außenschicht enthalten können.

Das erfindungsgemäße Verfahren eignet sich insbesondere auch zum Einfärben von einlagigen Gießfolien und auch für empfindliche, kompliziertere Schichtaufbauten, wie beispielsweise für Displays der TFT Bildschirme.

Besonders geeignet für solche aktiven Displayfolien sind Polyamid 1, Polyamid 2 und Polyamid 3 und Polyamid 4, mit ausgezeichneten Schutzeigenschaften oder Brechungsindizes, hergestellt als hochreine Gießfolien, die anschließend zu mehrschichtigen Displayfolien laminiert werden. Geeignete Lösungsmittel zur Herstellung der 15 bis 20 Gew.-% Gießlösung sind beispielsweise Methylenchlorid und/oder Trifluorethanol und/oder Benzylalkohol oder Mischungen daraus.

Die Herstellung der homogenen Lösung kann durch Druck und Temperatur beschleunigt werden. Eine so hergestellte Lösung bleibt auch bei Raumtemperatur stabil und kann im Gießprozess eingesetzt werden. Insbesondere eine Mischung aus 3 Teilen Methylenchlorid und 2 Teilen Triflourethanol führt zu vorteilhaften, filtrierbaren Gießlösungen zur Herstellung von hochwertigen optischen Schutzfolien oder dotierbaren Trägerfolien für Displaylaminate aus hochtransparenten und mechanisch stabilen Polyamiden.

Polyamide sind auch zur Herstellung von Polarisationsfolien geeignet, da ähnlich wie beim Polyvinylalkohol die Abstände von NH-Gruppen über das gewählte Monomer so eingestellt werden können, wie das mit den OH-Gruppen des PVA möglich ist. Diese NH-Gruppen können wie die OH-Gruppen mit Jod dotiert werden, z.B. durch das erfindungsgemäße Verfahren und durch Variation des NH Abstandes zur Wechselwirkung gebracht werden. Nach dem Orientieren einer dotierten Folie durch Verstrecken entsteht eine eindimensionale Leiterstruktur des Jods, die zur Polarisation des Lichtes führt.

Gegenüber einer Polarisationsfolie aus PVA besitzt eine Polarisationsfolie aus Polyamid deutliche Vorteile in den mechanischen Eigenschaften, in der Wasseraufnahme, in der thermischen Stabilität, der Orientierung und in der chemischen Resistenz. Als geeignete Schutzfolien können ebenfalls Polyamidfolien eingesetzt werden, die keine Haftungsprobleme zur Polyamid Polarisationsfolie zeigen. Einfärben, Ausrüsten und Dotieren der Folien oder Laminate können durch das erfindungsgemäße Verfahren durchgeführt werden. Jede Polyamidschicht kann mit frei wählbaren Brechungsindizes von 1,50 bis 1,65 ausgelegt werden. Die Schichten können zusätzlich verstreckt und parallel oder senkrecht zur Orientierung geschichtet werden. Dadurch können bestimmte Gitter oder Filtereffekte erzielt werden. Solche parallel und/oder senkrecht geschichteten Polyamidfolien können als Laminat ein- oder zweidimensional verstreckt werden und auf eine Dicke der Einzelschicht von beispielsweise 10 bis 1000 nm gebracht werden, was zu interessanten optischen Eigenschaften führt.

Display Folien auf der Basis von Polyamiden mit Polyamid Polarisator Schicht ermöglichen im Gegensatz zu den auf PVA basierenden Polarisationsfolien die Herstellung des aufrollbaren Bildschirms, der aus dem Kugelschreiber oder aus dem Handy gezogen wird. Aktive Bildschirme können als Rollenware in jeder Dimension hergestellt werden.

Polyamide besitzen insbesondere hervorragende Eigenschaften zur Herstellung von Folien und Fasern über thermoplastische Schmelzeverarbeitung. Damit werden für Monofolien oder Mehrschicht-Laminate alternative Herstellverfahren zur Gießfilmherstellung zugänglich, wie beispielsweise die Ein- oder Mehrschicht Flach- oder Blasfolienherstellung, die deutlich effizienter, wirtschaftlicher und umweltschonender arbeiten.

Die erfindungsgemäße Färbe-/Dotierungsmethode erlaubt auch die Behandlung von Formteilen, die aus verschiedenen transparenten Polyamiden aufgebaut sind. Das ist besonders bei Extrusions- oder Spritzguss-Verbundmaterialien von Vorteil, wo die verschiedenen Polyamide verschiedene Anforderungen zu erfüllen haben und durch das Funktionsbad nicht verändert werden dürfen.

Mögliche Anwendungsbereiche der gefärbten Formteile neben Linsen sind:
■ Schalterelemente und Heizungs-/Lüftungsblenden in der Automobilindustrie oder im Bereich der Haushaltswaren und der Telekommunikation,
■ Elektrolumineszierende Folien, z.B. Displayfolien, die extrem flache, leuchtende Bauteile ohne Verwendung von LEDs ermöglichen.

Die vorliegende Erfindung wird nunmehr anhand der folgenden Beispiele näher erläutert, ohne sie jedoch darauf zu begrenzen.

### 5. Beispiele

### Beispiel 1. Herstellung Polyamid PA1

35,7 kg Diamin MACM (3,3 Diamino-4,4 Dimethyl-Dicyclohexyl-methan) und 34,2 kg Dodecandicarbonsäure werden mit 30 kg Wasser in einen 130 L Autoklaven mit Rührer gegeben. Nach dem Aufheizen auf 280 °C und einem Druck von maximal 30 bar, bevorzugt 20 bar wird der Ansatz auf Normaldruck entspannt und bis zum gewünschten Drehmoment entgast. Die Polymerschmelze wird in Strängen ausgetragen, im Wasserbad gekühlt und granuliert. Nach dem Trocknen wird eine relative Viskosität in 0,5% m-Kresol von 1,73 und ein Tg von 153 °C erhalten. Das Polyamid ist amorph und glasklar.

Auf einer Arburg Spritzgiessmaschine werden runde Linsenplatten 70x2mm im polierten Werkzeug hergestellt. Die Zylindertemperatur liegt zwischen 260 und 340 °C mit Werkzeugtemperaturen zwischen 45 und 140 °C. Diese Linsenplatten weisen einen Haze von 0.30 und eine Lichttransmission von 94 % auf und werden im Funktionsbad eingefärbt.

### Beispiel 2 . Herstellung Polyamid PA2

23,0 kg Diamin PACM (3,3 Diamino-Dicyclohexylmethan) und 11,2 kg Diamin MACM (3,3 Diamino-4,4 Dimethyl-Dicyclohexyl-methan) und 35,7 kg Dodecandicarbonsäure werden mit 30,0 kg Wasser in einen 130 L Autoklaven mit Rührer gegeben. Nach dem Aufheizen auf 280 °C und einem Druck von maximal 30 bar, bevorzugt 20 bar wird der Ansatz auf Normaldruck entspannt und bis zum gewünschten Drehmoment entgast. Die Polymerschmelze wird in Strängen ausgetragen, im Wasserbad gekühlt und granuliert. Nach dem Trocknen wird eine relative Viskosität in 0,5% m-Kresol von 1,85 und ein Tg von 144 °C und Schmelzpunkt 237 °C erhalten. Das Polyamid ist mikrokristallin und glasklar.

### Beispiel 3. Herstellung Polyamid PA3

30,0 kg Diamin MACM (3,3 Diamino-4,4 Dimethyl-Dicyclohexyl-methan) und 20,7 kg Isophthalsäure und 26,0 kg Laurinlactam werden mit 23,0 kg Wasser in einen 130 L Autoklaven mit Rührer gegeben. Nach dem Aufheizen auf 280 °C und einem Druck von maximal 30 bar, bevorzugt 20 bar wird der Ansatz auf Normaldruck entspannt und bis zum gewünschten Drehmoment entgast. Die Polymerschmelze wird in Strängen ausgetragen, im Wasserbad gekühlt und granuliert. Nach dem Trocknen wird eine relative Viskosität in 0,5% m-Kresol von 1,55 und ein Tg von 160 °C erhalten. Das Polyamid ist amorph und glasklar.

### Beispiel 4. Herstellung Polyamid PA4

Im Löser eines 130L Druckautoklaven werden 10,0 kg Hexamethylendiamin, 23,0 kg m-Xylylendiamin, 42,4 kg Isophthalsäure, in 24,0 kg Wasser suspendiert und während 2 h auf 140 - 180 °C aufgeheizt und gerührt, wobei sich ein Druck von ca. 3,5 - 10 bar einstellt. Nach der Übergabe der Lösung in den Druckautoklaven wird keine Druckphase gefahren, sondern während dem Aufheizen auf 260 °C gleichzeitig entspannt, sodass der Druck im inneren des Druckautoklaven immer unter 4 bar liegt. Danach wird weitergerührt und der Druck langsam auf 1 bar gesenkt und circa weitere 3 h entgast. Nach Erreichen des gewünschten Drehmomentes des Rührers wird der Ansatz durch eine Düse mit Bohrungen von ca. 5 mm entleert. Die entstehenden Polymerstränge werden durch ein Wasserbad geführt, gekühlt und zu Granulat geschnitten. Danach wird ca. 12h bei 100 °C in einem Taumeltrockner unter Stickstoff getrocknet. Es entsteht ein farbloses, glasklares, amorphes Polyamid mit einem Glasumwandlungspunkt von 160 °C und einer relativen Viskosität von 1,36, gemessen in 0,5%iger m-Kresollösung.

Daraus werden wie im Beispiel 1 Linsenplatten hergestellt, die einen Haze von 0.50 und eine Lichttransmission von 92 % aufweisen.

### Beispiel 5: Einfärbungen im Funktionsbad mit PA 1

### Herstellung der Funktionsbäder Nr. 1 - 5

Zur Herstellung der Farblösung werden 0,5 g Dispersionsfarbe Foron® rot RD-E (Clariant) bei 40 bis 60 °C in deionisiertem Wasser unter Rühren dispergiert.

Zur Herstellung der Färbeflotte werden in einem 1-1-Becherglas die Komponenten A) bis E) und G) und deionisiertes Wasser gemischt und unter Rühren auf 60 °C erwärmt. Als Tenside/Emulgator C) werden dabei 10 ppm Natriumlaurylsulfat und als Puffer G) 9,08 g Kaliumdihydrogenphosphat verwendet.

Anschließend wird die Farblösung in die Lösung der anderen Komponenten im Becherglas gegeben. Es wird mit deionisiertem Wasser auf 1 1 aufgefüllt und auf die Färbetemperatur von 85 °C erwärmt.

Als Carrier werden Diethylenglykolmonobutylether, Triethylenglykol und Polyethylenglkol 400 in Mengen gemäß Tabelle 1 eingesetzt.

Tabelle 1 gibt die Verhältnisse der Komponenten A), D) und E) in den Versuchsfarbbädern wieder.

**Tabelle 1: Verhältnisse der Komponenten A), D) und E) (erfindungsgemäß ist Bad Nr. 1)**

| Bad Nr. | Diethylenglykol - monobutylether A) | Triethylenglykol D) | Polyethylenglykol 400 E) |
|---|---|---|---|
| 1 | 20 g/l | 20 g/l | 1 g/l |
| 2 | 20 g/l | 20 g/l | |
| 3 | 20 g/l | | g/l |
| 4 | | 20 g/l | 1 g/l |
| 5 | 20 g/l | | |

### Färbeverfahren für Linsenplatten aus PA1, 85 °C/15 Minuten Tauchzeit

Das Formteil wird in destilliertem Wasser, welches Tenside/Emulgatoren enthalten kann, gereinigt, in einer geeigneten Halterung an einem Deckel befestigt und in das beheizte, leicht gerührte Farbbad bei 85 °C eingetaucht. Nach 15 Minuten wird das Formteil wieder herausgezogen und mit destilliertem Wasser im Ultraschallbad gereinigt und mit Druckluft getrocknet.

Die optischen Messungen wurden an einem Gerät Typ Byk Gardner Haze-Gard Plus (Hersteller Byk-Gardner) nach ASTM D 1003 durchgeführt.

| | Haze in % | Lichtransmission in % |
|---|---|---|
| Bad Nr. | nach Färbung | nach Färbung |
| 1 | 0,80 | 54,6 |
| 2 | 6,70 | 48,6 |
| 3 | 2,30 | 51,0 |
| 4 | 0,90 | 86,0 |
| 5 | 1,60 | 48,8 |

| | | |
|---|---|---|
| Bad 1 führt zu Haze < 1 % und einer Lichttransmission < 80% Bad 2 führt zu Haze > 1 % Bad 3 führt zu Haze > 1 % Bad 4 führt zu Haze < 1% und einer Lichttransmission > 80% Bad 5 führt zu Haze > 1 % | | |

Resultat: Bad Nr. 1 mit Diethylenglykolmomobutylether, Triethylenglykol und Polyethylenglykol (PEG 400) führt zu gefärbten Linsenplatten mit niedrigen Haze-Werten bei einer hohen Farbtiefe von 54 % Lichttransmission.

Bad Nr. 4 ohne Diethylenglykolmonobutylether führt zu einem höherem Haze und einer geringeren Farbtiefe.

Ausschließlich Bad 1 (erfindungsgemäß) erfüllt die Aufgabe der Erfindung.

### Beispiel 6: Färbeverfahren für Linsenplatten PA4, 75 °C/15 Minuten Tauchzeit

Die Farbbäder werden gemäss Beispiel 1 hergestellt.

| | Haze in % | Lichttransmission in % |
|---|---|---|
| Bad Nr. | nach Färbung | nach Färbung |
| 1 | 0,70 | 55,3 |
| 2 | 1,20 | 54,4 |
| 3 | 2,10 | 51,8 |
| 4 | 0,70 | 80,6 |
| 5 | 2,40 | 53,5 |

| | | |
|---|---|---|
| Bad 1 führt zu Haze < 1% und einer Lichttransmission < 80% Bad 2 führt zu Haze > 1% Bad 3 führt zu Haze > 1% Bad 4 führt zu Haze < 1 % und einer Lichttransmission > 80% Bad 5 führt zu Haze > 1 % | | |

Resultat: Ausschließlich Bad 1 (erfindungsgemäß) erfüllt die Aufgabe der Erfindung und ermöglicht bei einem Haze < 1% und eine hohe Farbtiefe.

### Beispiel 7: Herstellung des Funktionsbades Nr. 6 (erfindungsgemäß)

Zur Herstellung der Färbesuspension werden je 0,15 g der Farbstoffe Cibacet Blau EL-B, Cibacet Gelb EL-F2G, Cibacet Scharlach EL-F2G (Dispersionsfarbstoffe, Ciba) sowie 0,3 g Benzanyl schwarz N-R (Säurefarbstoff, Bezema) in ein 200-ml-Becherglas eingewogen und mit 100 ml Wasser aufgefüllt. Dem Ansatz wurden 1,5 g Univadine Top und 1,5 g Sandacid PB zugegeben, anschließend wurde unter vorsichtigem Rühren mittels Magnetrührstäbchen vorsichtig auf 60°C erwärmt, bis eine homogene Dispersion vorlag.

Die Suspension wurde anschließend in ein mit 900 ml Wasser gefülltes und auf 60°C vorgewärmtes Becherglas gegeben und auf 85°C unter Rühren erwärmt.

Als Tenside/Emulgator C) werden dabei 10 ppm Natrium-Laurylsulfonat und als Puffer G) 1,5 g Sandacid PB verwendet. Als Carrier werden Diethylenglykolmonobutylether, Triethylenglykol und Polyethylenglykol 400 in Mengen gemäß Tabelle 2 eingesetzt. Tabelle 2 gibt die Verhältnisse der Komponenten A) bis H) im Bad Nr. 6 wieder.

**Tabelle 2: Verhältnisse der Komponenten A) bis H) (Bad Nr. 6)**

| **Komponente** | **g** | | **Bezeichnung Komponente** |
|---|---|---|---|
| Cibacet Blau EL-B | 0,15 | Dispersionsfarbstoff, Ciba | F |
| Cibacet Gelb EL-F2G | 0,15 | Dispersionsfarbstoff, Ciba | F |
| Cibacet Scharlach EL-F2G | 0,15 | Dispersionsfarbstoff, Ciba | F |
| Benzanyl schwarz N-R | 0,3 | Säurefarbstoff, Bezema | F |
| Univadine Top | 1,5 | Dispersionshilfsmittel für Dispersionsfarbstoffe | H |
| Sandacid PB | 1,5 | Puffer | G |
| *DEG-Monobutylether | 40 | | B |
| **TEG | 60 | | D |
| **PEG | 24 | | E |
| Na-Laurylsulfonat (ppm) | 10 | Tensid | C |
| Wasser deionisiert | 1000 | | A |

| | | | |
|---|---|---|---|
| *DEG = Diethylenglykol **TEG = Triethylenglykol ***PEG = Polyethylenglykol | | | |

Komponente H = Dispergierungsmittel und Stabilisierungshilfsmittel speziell für Dispersionsfarbstoffe

### Färbeverfahren für Linsenplatten aus PA1, 85°C/4 Min. Tauchzeit

Das Formteil (Linsenplatte PA1) wurde 4 Minuten in das Bad eingetaucht, anschließend in einem mit destilliertem Wasser gefüllten und mit 50 ppm Natrium-Laurylsulfonat versetztem Ultraschallbad gereinigt, mit destilliertem Wasser abgespült und an der Luft getrocknet.

Die optischen Messungen wurden an einem Gerät Typ Byk Gardner Haze-Gard Plus (Hersteller Byk-Gardner) nach ASTM D 1003 durchgeführt.

| | |
|---|---|
| Ergebnis: | |
| Transmission: | 43,1% (44,1%, 42,1%) |
| Haze: | 0,43% (0,42%, 0,44%) |
| Clarity: | 99,4% (99,4%, 99,4%) |

Damit wurden in deutlich kürzerer Färbezeit als in den oben aufgeführten Beispielen die Bedingungen erreicht, nämlich Transmission < 80% und Haze < 1%.

### Vergleichsbeispiel gemäss US 6,749,646 B2 (Stand der Technik)

Es wurde folgende Färbungen aus US 6,749,646 B2 nachgestellt:
Auszug aus US 6,749,646 B2, Tabelle 1, Spalte 6, Färbetemperatur 95 °C

| Farbe aus Color- Index | Bezeichnung Bayer (Lanxess) | Time in min | Lichttransmission in % | Haze in % |
|---|---|---|---|---|
| Red G | Macrolex rot G | 10 | 32,7 | 2,5 |
| Red 5B | Macrolex rot 5B | 10 | 67,8 | 2,2 |
| Solven Green 3 | Macrolex grün 5B | 10 | 69,8 | 1,4 |
| Dispers violet 26 | Macrolex rotviolet R | 10 | 57,3 | 3,0 |

### Herstellung Färbelösung gemäss US 6,749,646 B2

Es wurden von 0,4% Farbstoff gemäss Tabelle 1, Beispiel mit "RED 5B" mit 66 g Levegal DLP (50 ml) durch Erwärmen unter Rühren auf 95 °C gelöst, dann in ein Becherglas mit Wasser (vorgeheizt auf 95 °C) zugegeben und auf einen Liter ergänzt.

### Färbeverfahren gemäss US 6,749,646 B2

Die Formteile, Linsenplatten mit 2 mm Dicke aus PA1 werden in destilliertem Wasser gereinigt und in das leicht gerührte Farbbad mit 95 °C eingetaucht. Nach 10 Minuten, wie in Tabelle 1, Beispiel mit "RED 5B", wurde das Formteil wieder ausgezogen, in destilliertem Wasser bei 23 °C im Ultraschallbad gereinigt und mit Luft getrocknet.

Zur Überprüfung der Eignung des Verfahrens wurden einige Beispiele aus Tabelle 1 von US 6,749,646 B2 nachgestellt. Die untenstehende Tabelle enthält die Resultate der Nachstellungen:

| Bezeichnung Bayer (Lanxess) | Aussehen Vordispersion oder Bad | Lichttransmission in % | Haze in % |
|---|---|---|---|
| Macrolex rot G | Bad: Perlmuttartige Suspension mit deutlich sichtbaren organischen und wässerigen Phasen. Bad ist ungeeignet, deshalb keine Färbung | - | - |
| Macrolex rot 5B | Bad: Starke Ablagerungen, Farbe fällt aus | 91,8 | 0,58 |
| Macrolex grün 5B | Vordispersion von Farbe und Carrier stockt nach kurzem Stehenlassen. Es konnte kein Bad angesetzt werden. | - | - |
| Macrolex rotviolet R | Bad: homogen, dunkel. Nach kurzem Stehenlassen hat das Bad einen starken Bodensatz | 80,6 | 0.66 |

Keines der Bäder erfüllt die Stabilitätsbedingung.

### Änderung eines Beispiels:

Mischen von 0,04% Farbe (anstelle 0,4% gemäß Tabelle 1, Beispiel mit "RED 5B") mit 66 g Levegal DLP (50 ml) durch Erwärmen unter Rühren auf 95 °C, dann zu einem Liter Wasser (vorgeheizt auf 95 °C) zugeben. Eine solche Farbkonzentration wäre typisch für Färbeflotten.
Temperatur: 95 °C, Zeit: 15 Minuten

| Bezeichnung Bayer (Lanxess) | Aussehen Vordispersion oder Bad | Lichttransmission in % | Haze in % |
|---|---|---|---|
| Macrolex rot G | Bad: Klare Lösung | 87,4 | 0,34 |

Es werden tiefe Hazewerte erreicht, die erreichbaren Farbtiefen sind aber gering und zeigen sich in einer hohen Lichttransmission.

### Beispiel 8: Stabilität des erfindungsgemäßen Farbbads

Das Farbbad Nr. 1 der Beispiele 5 und 6 wurde nach der Färbung auf Raumtemperatur abgekühlt und in einer geschlossen Flasche aufbewahrt. Nach sieben Tagen wurde das Farbbad wieder auf 85 °C aufgeheizt und weitere Färbungen durchgeführt. Die Resultate sind vergleichbar zu Beispiel 5. Das Farbbad weist keine Ablagerungen an den Wänden auf und zeigt einen geringen Bodensatz, der aber vor der Wiederverwendung leicht aufgerührt werden kann.

### Beispiel 9: Stabilität gefärbter Linsenplatten gegen Ausbluten in Primerlösungen

Auf Platten, gefärbt mit Bad 1 gemäss Beispiel 5 und 6, wurde je ein Tropfen folgender Primer für 30 Sek. aufgetragen:
CyrstalCoat PR 1133 (enthält 70 bis 77% Wasser, 16 bis 18% 2-Butoxylethanol, 3 bis 5% Diethylenglykolmonobutylether)
CrystalCoat PR 1135 (enthält 70 bis 72% Wasser, 12 bis 15% 2-Butoxylethanol, 2 bis 4% N-Methlypyrrolidon)
CrystalCoat PR 1165 (enthält 7 bis 9% Wasser, 30 bis 35% Isopropanol, 1 bis 5% N-Methylpyrrolidon, 30 bis 60% 1-Methoxy-2-Propanol)

Der Tropfen wurde nach 30 Sekunden mit Saug-Papiertüchern abgewischt. Der abgewischte Primer zeigte keine Verfärbung, auch nicht bei Abwischen unter stärkerem manuellen Druck. Es findet also keinerlei Ausbluten statt.

### Beispiel 10: Herstellung eines Masterbatch für den UV-Schutz für Polyamid 1, 2,3

8,1 kg Polymer 1 und 1,0 kg Griltex 2 AGF (Basismaterial PA 1 enthaltend den optischen Aufheller Blancophor) werden mit 0,90 kg Tinuvin 326 30 Minuten angerollt und zusammen bei 280 °C extrudiert. Die Stränge nach dem Extruder werden im Wasserbad gekühlt, geschnitten und getrocknet. Zur Ausrüstung von Polymer 1, 2 oder 3 mit UV-Schutz (Transmission bei 400 nm < 0,5%) werden 4% dieses Masterbatches mit dem übrigen Granulat vermischt und direkt zum Formteil verspritzt.

## Patentansprüche

1. Funktionsbad zum Tönen bzw. Färben oder Dotieren von Formteilen aus transparenten oder transluzenten (Co)Polyamiden, wobei das Funktionsbad aus folgenden Komponenten besteht:
| | | |
|---|---|---|
| A) | deionisiertes Wasser | |
| B) | (Träger) Carrier | 0,10 - 6,00 Gew.-%, |
| C) | Tenside/Emulgator | 0,001 - 1,00 Gew.-%, |
| D) | Oberflächenaktive Substanz D | 0,50 - 4,00 Gew.-%, |
| E) | Oberflächenaktive Substanz E | 0,01 - 3,00, insbesondere 0,01 - 2,00 Gew.-%, |
| F) | Farbstoffe oder Dotierungsmittel | 0,01 - 0,90 Gew.-%, |
| G) | Puffer | 0 - 3,00 Gew.-%, |
| und gegebenenfalls | | |
| H) | Dispersionshilfsmittel für Farbstoffe oder Dotierungsmittel (F) 0 - 4,00 auf der Basis einer anionischen Zubereitung aus ethoxylierten Fettamin-Estern, Aralkylpolyglykolether und einem modifizierten Polyalkohol, | |
wobei sich die Mengen der Komponenten (A) bis (G) und gegebenenfalls (H) auf 100 Gew.-% addieren,
wobei der Träger (B) aus wenigstens einem Monohydroxyglykol besteht, ausgewählt aus der Gruppe, bestehend aus Ethylenglykolmonobutylether und Diethylenglykolmonobutylether,
wobei die oberflächenaktive Substanz (D) aus wenigstens einem Glykol besteht, ausgewählt aus der Gruppe, bestehend aus Diethylenglykol und Triethylenglykol und
wobei die oberflächenaktive Substanz (E) aus wenigstens einem Polyalkylenglykol der allgemeinen Formel (3) besteht:
R¹-{[-O-(CH₂)ₙ]ₘ}OR²
worin R¹ und R² = H mit n = 2 - 4 und m = 6 - 35 ist.

2. Funktionsbad gemäß Anspruch 1, **dadurch gekennzeichnet, dass** die Komponenten in folgenden Mengen in Gew.-% enthalten sind:
| | | |
|---|---|---|
| A) | deionisiertes Wasser | |
| B) | (Träger) Carrier | 1,00 - 4,00 |
| | | bevorzugt 1,00 - 3,00 |
| C) | Tenside/Emulgator | 0,001 - 0,50 |
| | | bevorzugt 0,001 - 0,30 |
| D) | Oberflächenaktive Substanz D | 0,50 - 4,00 |
| | | bevorzugt 1,00 - 3,00 |
| E) | Oberflächenaktive Substanz E | 0,05 - 1,00 |
| | | bevorzugt 0,05 - 0,20 |
| F) | Farbstoffe oder Dotierungsmittel | 0,01 - 0,40 |
| | | bevorzugt 0,01 - 0,20 |
| G) | Puffer | 0 - 2,0 |
| | | bevorzugt 0 - 1,0, |
| gegebenenfalls | | |
| H) | Dispersionsmittel | 0 - 3,00, bevorzugt 0 - 2 |

3. Funktionsbad gemäß einem der Ansprüche 1 oder 2, **dadurch gekennzeichnet, dass** es einen pH-Wert von 3,5 bis 7, bevorzugt von 4 bis 6, aufweist.

4. Verwendung des Funktionsbads gemäß einem der Ansprüche 1 bis 3 in einem Verfahren zum Tönen bzw. Färben oder Dotieren von Formteilen mit Funktionsadditiven aus transparenten oder transluzenten (Co)Polyamiden in wässerigen Tauchbädern bzw. Funktionsbädern, umfassend die folgenden Schritte:
(a) Bereitstellen des Tauch- bzw. Funktionsbades, das Wasser (A), Puffer (G), einen Träger (Carrier) (B), Tenside/Emulgatoren (C), oberflächenaktive Substanzen (D), (E) und eine zum Tönen bzw. Färben oder Dotieren ausreichende Menge wenigstens eines Stoffes, ausgewählt aus der Gruppe der Farbstoffe oder der Dotierungsmittel (F), oder der Farbstoffpigmente, der Interferenzpigmente, der UV-Additive, der photochromen oder thermochromen Additive, der Additive aus der Gruppe der kontrastverstärkenden Additive oder der Additive, die den Brechungsindex beeinflussen und gegebenenfalls Dispersionsmittel (H) für Farbstoffe oder Dotierungsmittel auf Basis einer anionischen Zubereitung aus ethoxylierten Fettamin-Estern, Aralkylpolyglykolether und einem modifizierten Polyalkohol enthält,
(b) Aufheizen des Tauch- bzw. Funktionsbades auf eine Temperatur von zwischen 50 und 95 °C,
(c) Vorbehandeln des Formteils in einem Tauchbad, enthaltend Wasser (A), Tenside und/oder Emulgatoren (C) zur Reinigung des Formteiles, Aufheizen des Tauchbades auf eine Temperatur von zwischen 50 und 95 °C und Herausnehmen des temperierten und gereinigten Formteiles aus dem Vorbehandlungs-Tauchbad,
(d) Eintauchen wenigstens eines Teils des Formteils in das Funktionsbad, Halten des Formteils im Funktionsbad für eine Zeitdauer von 5 bis 60 Minuten, um zu erlauben, dass eine ausreichende Menge des Farbstoffes oder des Dotierungsmittels (F) oder des Farbstoffpigments oder Interferenzpigments, eines UV-Additivs, eines photochromen oder thermochromen Additivs oder eines Additivs aus der Gruppe der kontrastverstärkenden Additive oder Additive, die den Brechungsindex beeinflussen, in den Formkörper defundieren kann, und
(e) Ausziehen des Formkörpers aus dem Funktionsbad und Nachbehandeln des Formteils,
(f) Abkühlen des Formteils,
(g) Trocknen des Formteils,
wobei der Formkörper wenigstens einen thermoplastischen Kunststoff enthält, ausgewählt aus der Gruppe aus transparenten (Co)Polyamiden.

5. Verwendung gemäß Anspruch 4, **dadurch gekennzeichnet, dass** eine zusätzliche Reinigungs-Nachbehandlung (e) des eingefärbten oder dotierten Formteils in einem Wasserbad durchgeführt wird, welches Tenside, insbesondere Natrium-Laurylsulfonat, und/oder Emulgatoren enthält, gegebenenfalls eine Ultraschallbehandlung durchgeführt wird und das Formteil auf Raumtemperatur abgekühlt wird.

6. Verwendung gemäß einem der Ansprüche 4 oder 5, **dadurch gekennzeichnet, dass** eine weitere Nachbehandlung des fertig ausgerüsteten Formteils durch Aufbringen von wenigstens einer Hartlackschicht und/oder einer Entspiegelungsschicht und/oder einer Antireflexschicht und/oder von wasserabweisenden Schichten und/oder Antibeschlagsschichten durchgeführt wird, wobei insbesondere in nachfolgenden Bädern Hartlackschichten mit oder ohne Primerschichten und/oder Antireflexschichten aufgebracht werden.

7. Verwendung gemäß einem der Ansprüche 4 bis 6, **dadurch gekennzeichnet, dass** auf das Formteil weitere Funktionsschichten durch Sputter- oder Bedampfungsverfahren aufgebracht werden.

8. Verwendung gemäß Anspruch 4, **dadurch gekennzeichnet, dass** das Funktionsbad Tenside/Emulgatoren (C) enthält, ausgewählt aus der Gruppe, bestehend aus ionischen Tensiden, amphoteren Tensiden und nichtionischen Tensiden.

9. Verwendung gemäß irgendeinem der Ansprüche 4 bis 8, **dadurch gekennzeichnet, dass** der Farbstoff aus der Gruppe der Dispersionsfarbstoffe und/oder der Gruppe der Säurefarbstoffe ausgewählt ist.

10. Verwendung gemäß irgendeinem der Ansprüche 4 bis 9, **dadurch gekennzeichnet, dass** die zur Herstellung des Formkörpers verwendeten transparenten Formmassen bereits Additive aus der Gruppe der Stabilisatoren, der UV-Stabilisatoren, der optischen Aufheller, der Gleitmittel, der Farbstoffe, der Metallflitter, der nanoskaligen Funktions- und/oder Füllstoffe, der Schlagzähmodifikatoren oder der Verstärkungsstoffe oder der Mischungen daraus, enthält, wobei bevorzugt die Additive den Formmassen durch Einarbeiten eines entsprechenden Masterbatches zugesetzt werden.

11. Verwendung gemäß Anspruch 10, **dadurch gekennzeichnet, dass** die UV-Ausrüstung der Formmassen zur Herstellung der Formkörper über die Einarbeitung von 2 bis 10 Gew.-% des entsprechenden Masterbatches vor der Formteilherstellung durchgeführt worden ist.

12. Verwendung gemäß Anspruch 11, **dadurch gekennzeichnet, dass** als Masterbatch ein Masterbatch auf Polymerbasis aus dem Hauptmaterial der Formmasse für das Formteil und 5 bis 50 Gew.-% eines zusätzlichen tieferschmelzenden, teilkristallinen, im Hauptmaterial löslichen Kunststoffes mit einem Schmelzpunkt unterhalb der Glasumwandlungstemperatur (Tg) der Hauptkomponente eingesetzt wird.

13. Verwendung gemäß einem der vorhergehenden Ansprüche 4 bis 12, **dadurch gekennzeichnet, dass** der Formkörper Titandioxid enthält.

14. Verwendung gemäß einem der Ansprüche 4 bis 13, **dadurch gekennzeichnet, dass** als Polyalkylenglykol Polyethylenglykol 400 verwendet wird.

15. Verwendung gemäß einem der Ansprüche 4 bis 14, **dadurch gekennzeichnet, dass** in der Färbelösung Ethylenglykolmonobutylether und/oder Diethylenglykolmonobutylether in Mengen von 0,1 bis 6 Gew.-%, Diethylenglykol und/oder Triethylenglykol in Mengen von 0,01 bis 7 Gew.-% und wenigstens ein Polyalkylenglykol gemäß Formel (3) in Mengen von 0,01 bis 3 Gew.-% enthalten sind.

16. Verwendung gemäß irgendeinem der vorhergehenden Ansprüche 4 bis 15, **dadurch gekennzeichnet, dass** das Funktionsbad derart hergestellt wird, dass Komponente (A) vorgelegt und die anderen Komponenten unter Rühren eingemischt werden.

17. Verwendung gemäß irgendeinem der vorhergehenden Ansprüche 4 bis 16, **dadurch gekennzeichnet, dass** das Funktionsbad indirekt beheizt wird.

18. Verwendung gemäß irgendeinem der vorhergehenden Ansprüche 4 bis 17, **dadurch gekennzeichnet, dass** als Formteil ein Formteil verwendet wird, welches mit wenigstens einer transparenten oder transluzenten Oberflächenschicht und/oder mit Dekorfolien, Funktionsfolien oder Lacken oder Kautschuken oder anderen Kunstoffen verbunden ist und einen Werkstoffverbund bildet.

19. Verwendung gemäß irgendeinem der vorhergehenden Ansprüche 4 bis 17, **dadurch gekennzeichnet, dass** das Formteil eine einlagige Gießfolie ist.

20. Verwendung gemäß irgendeinem der vorhergehenden Ansprüche 4 bis 19, **dadurch gekennzeichnet, dass** die transparenten (Co)Polyamide aus amorphen oder mikrokristallinen Polyamiden hergestellt sind oder als deren transparente Mischung vorliegen oder als transparente Blends mit einem oder mehreren teilkristallinen Polyamiden aus der Gruppe aus Polyamid 12, Polyamid 11, Polyamid 6, Polyamid 1212, Polyamid 612 vorliegen und insbesondere folgende Zusammensetzung aufweisen: PA 61, PA 6I/6T, PA MXDI/6I, PA MXDI/MXDT/6I/6T, PA MXDI/121, PA MACMI/12, PA MACMI/MACMT/12, 6I/MACMI/12, PA 6I/6T/MACMI/MACMT/12, PA PACM6/11, PA PACM12, PA PACMI/PACM12, PA MACM6/11, PA MACM12, PA MACMI/MACM12, PA MACM 12/PACM 12, PA 6I/6T/PACMI/PACMT/PACM12/612.

21. Getöntes bzw. gefärbtes oder dotiertes Formteil, herstellbar gemäß dem Verfahren gemäß irgendeinem oder mehreren der vorhergehenden Ansprüche 4 bis 20.

22. Formteil gemäß Anspruch 21, **dadurch gekennzeichnet, dass** es mit wenigstens einer transparenten oder transluzenten Oberflächenschicht und/oder mit Dekorfolien, Funktionsfolien oder Lacken oder Kunststoffen oder anderen Kunststoffen verbunden ist und einen Werkstoffverbund ergibt, der mit dem Verfahren gemäß einem der Ansprüche 4 bis 20 getönt bzw. eingefärbt oder dotiert worden ist.

23. Formteil oder Werkstoffverbund gemäß Anspruch 22, **dadurch gekennzeichnet, dass** es oder er für optische Bauteile wie ophthalmische Linsen oder Sonnenlinsen für Brillen, Lupen, Linsensysteme, Mikroskope, Kameras, Displays für Handys, Kameralinsen, Messinstrumente, Uhrengläser oder Uhrengehäuse, Gehäuse für tragbare Telefone mit oder ohne integrierte Displays oder Apparate jeder Art und für CD's, DVD's, Linsen für LED's, Lichtwellenleiter, Lichtkoppler, -Verstärker, Verteiler und Scheiben für Lampen und Lasergeräte, Verbundfolien, Verbundbehälter, und transparente Verbunde aller Art verwendet wird.

24. Formteil gemäß Anspruch 21, **dadurch gekennzeichnet, dass** es für Display- oder Bildschirmfolien, die anschließend zu mehrschichtigen Displayfolien laminiert sein können, verwendet wird.

25. Formteil gemäß Anspruch 21 oder 22, **dadurch gekennzeichnet, dass** es für Schalterelemente und Heizungs-/Lüftungsblenden in der Automobilindustrie oder im Bereich der Haushaltswaren und der Telekommunikation, als elektrolumineszierende Folie verwendet wird.

26. Formteil gemäß einem der Ansprüche 21 bis 25, **dadurch gekennzeichnet, dass** tiefe Haze-Werte (Trübungswerte) von ≤ 1 % bei Farbtiefen von 10 - 93 % Lichttransmission, bevorzugt von 10 - 80 % Lichttransmission, besonders bevorzugt von 10 - 60 % Lichttransmission erreicht werden, wobei eine hochglänzende, einwandfreie Oberfläche des Formteils erhalten bleibt.

## Claims

1. A functional bath for tinting, dyeing or doping of moulded components made from transparent or translucent (co)polyamides, wherein said functional bath consists of the following components:
| | | |
|---|---|---|
| A) | deionized water | |
| B) | carrier | 0.10 - 6.00 wt.-%, |
| C) | tensides/emulsifier | 0.001 - 1.00 wt.-%, |
| D) | surfactant D | 0.50 - 4,00 wt.-%, |
| E) | surfactant E | 0.01 - 3.00, preferably 0.01 - 2.00 wt.-%, |
| F) | dyestuffs or doting agents | 0.01 - 0.90 wt.-%, |
| G) | buffer | 0 - 3.00 wt.-%, |
| and optionally, | | |
| H) | dispersion agents for dyestuffs or doting agents (F) 0 - 4.00 wt.-%, based on an anionic preparation of ethoxylated fatty amine esters, aralkyl polyglycolether and a modified polyalcohol, | |
wherein the amounts of the components (A) to (G) and, optionally (H) are added up to 100 wt-%,
wherein said carrier (B) consists of at least one monohydroxy glycol selected from the group consisting of ethylene glycol monobutyl ether and diethylene glycol monobutyl ether,
wherein said surfactant (D) consists of at least one glycol selected from the group consisting of diethylene glycol and triethylene glycol, and
wherein said surfactant (E) consists of at least one polyalkene glycol according to the general formula (3):
R¹-{[-O-(CH₂)ₙ]ₘ}OR²
wherein R¹ and R² denote H with n is 2 - 4 and m is 6 - 35.

2. The functional bath of claim 1, **characterized in that** the components are comprised in following quantities in wt%:
| | | | |
|---|---|---|---|
| A) | deionized water | | |
| B) | carrier | | 1.00 - 4.00, |
| | | preferably | 1.00 - 3.00, |
| C) | tensides/emulsifier | | 0.001 - 0.50, |
| | | preferably | 0.001 - 0.30, |
| D) | surfactant D | | 0.50 - 4.00, |
| | | preferably | 1.00 - 3.00, |
| E) | surfactant E | | 0.05 - 1.00, |
| | | preferably | 0.05 - 0.20, |
| F) | dyestuffs or doting agents | | 0.01 - 0.40, |
| | | preferably | 0.01 - 0.20, |
| G) | buffer | | 0 - 2.0, |
| | | preferably | 0 - 1.0, |
| and optionally, | | | |
| H) | dispersion agents | | 0 - 3.00, |
| | | preferably | 0 - 2.00. |

3. The functional bath of claim 1 or 2, **characterized in that** it comprises a pH-value of 3.5 to 7, preferably 4 to 6.

4. Use of the functional bath of any of claims 1 to 3 in a process for tinting, dyeing or doping of moulded components with functional additives made of transparent or translucent (co)polyamides in aqueous dipping baths or functional baths comprising the following steps of:
a) providing the dipping or functional bath comprising water (A), buffer (G), a carrier (B), tensides/emulsifiers (C), surfactants (D), (E), and at least one compound in sufficient quantity for tinting, dyeing or doping selected from the group of dyestuffs or doping agents (F), or of dye pigments, interference pigments, UV additives, photochromic or thermochromic additives, additives selected from the group of additives enhancing contrast or additives affecting refraction index, and optionally, dispersion agents (H) for dyestuffs or doting agents based on an anionic preparation of ethoxylated fatty amine esters, aralkyl polyglycol ether and a modified polyalcohol.
b) heating-up said dipping or functional bath to a temperature of between 50 and 95°C,
c) pretreating the moulded component in a dipping bath comprising water (A), tensides and/or emulsifiers (C) for cleaning said moulded component, heating-up said dipping bath to a temperature of between 50 and 95°C, and removing said tempered and cleaned moulded component from said pretreating dipping bath,
d) immersing at least a portion of said moulded component in said functional bath, retaining the moulded component in said functional bath for a period of time of 5 to 60 minutes to allow that a sufficient quantity of said dyestuffs or doping agents (F), or said dye pigments, said interference pigments, of a UV additive, a photochromic or thermochromic additive, or an additive selected from the group of additives enhancing contrast or additives affecting refraction index can diffuse into the moulded component, and
e) removing said moulded component from said functional bath, and subsequent treating said moulded component,
f) cooling-down said moulded component,
g) drying said moulded component,
wherein the moulded article comprises at least one thermoplastic synthetic material selected from the group of transparent (co)polyamides.

5. The use of claim 4, **characterized in that** an additional subsequent cleaning process (e) of said dyed or doped moulded component is performed in a water bath that comprises tensides, particularly sodium laurylsulfonate, and/or emulsifiers, optionally a ultrasonic treatment is performed, and said moulded component is cooled down to room temperature.

6. The use of any of claims 4 or 5, **characterized in that** a further subsequent treating of the completely equipped moulded component is performed by depositing of at least one hard lacquer coating and/or one blooming coating and/or one antireflection coating and/or water-repellent coatings and/or anti-fogging coatings, wherein, particularly, hard lacquer coatings with or without primary coatings and/or antireflection coatings are deposited in subsequent baths.

7. The use of any of claims 4 to 6, **characterized in that** further functional coatings are deposited on said moulded component by sputtering or vapour-depositing processes.

8. The use of claim 4, **characterized in that** said functional bath comprises tensides/emulsifiers (C), selected from the group consisting of ionic tensides, amphoteric tensides, and non-ionic tensides.

9. The use of any of claims 4 to 8, **characterized in that** the dyestuff is selected from the group of disperse dyes and/or from the group of acid dyes.

10. The use of any of claims 4 to 9, **characterized in that** the transparent moulding material used for preparing the moulded article already comprises additives from the group of stabilizers, UV stabilizers, optical brighteners, slip additives, dyestuffs, metal flakes, nano-scaled functional and/or filling agents, impact resisting modifiers or reinforcing agents or mixings thereof, wherein the additives are preferably added to the moulding materials by incorporating a corresponding master batch.

11. The use of claim 10, **characterized in that** the UV equipment of said moulding materials for preparing the moulded article has been performed by incorporating of 2 to 10 wt-% of the corresponding master batch before preparing the moulded component.

12. The use of claim 11, **characterized in that** a master batch based on polymer comprising the main material of moulding material for the moulded component and 5 to 50 wt-% of an additional low-melting, semi crystalline, main-material-soluble synthetic material, with a melting point beneath the glass transition temperature (Tg) of the main component, is used as master batch.

13. The use of any of preceding claims 4 to 12, **characterized in that** said moulded article comprises titanium dioxide.

14. The use of any of claims 4 to 13, **characterized in that** polyethylene glycol 400 is used as polyalkylene glycol.

15. The use of any of claims 4 to 14, **characterized in that** ethylene glycol monobutyl ether and/or diethylene glycol monobutyl ether in quantities of 0.1 to 6 wt-%, diethylene glycol and/or triethylene glycol in quantities of 0.01 to 7 wt-%, and at least one polyalkylene glycol according to formula (3) in quantities of 0.01 to 3 wt-% are comprised in the dye solution.

16. The use of any of preceding claims 4 to 15, **characterized in that** said functional bath is prepared in such a way that component (A) is provided, and the other components are mixed in with stirring.

17. The use of any of preceding claims 4 to 16, **characterized in that** said functional bath is indirectly heated.

18. The use of any of preceding claims 4 to 17, **characterized in that** a moulded component is used as a moulded component that is connected with at least one transparent or translucent surface layer and/or with decoration films, functional films or lacquers or rubbers or other synthetic materials, and forms a material composite.

19. The use of any of preceding claims 4 to 17, **characterized in that** said moulded component is a single-layer cast film.

20. The use of any of preceding claims 4 to 19, **characterized in that** said transparent (co)polyamides are made from amorphous or microcrystalline polyamides or are present as their transparent mixture or are present as transparent blends with one or more semi crystalline polyamides from the group of polyamide 12, polyamide 11, polyamide 6, polyamide 1212, polyamide 612 and preferably have following composition: PA 6I, PA 6I/6T, PA MXDI/6I, PA MXDI/MXDT/6I/6T, PA MXDI/12I, PA MACMI/12, PA MACMI/MACMT/12, 6I/MACMI/12 PA 6I/6T/MACMI/MACMT/12, PA PACM6/11, PA PACM12, PA PACMI/PACM12, PA MACM6/11, PA MACM12, PA MACMI/MACM12, PA MACM12/PACM12, PA 6I/6T/PACMI/PACMT/PACM12/612.

21. A tinted, dyed or doped moulded article, producible according to the process of any or several of preceding claims 4 to 20.

22. The moulded article of claim 21, **characterized in that** it is connected with at least one transparent or translucent surface layer and/or with decoration films, functional films or lacquers or synthetic materials or other synthetic materials and forms a material composite that is tinted, dyed or doped by a method of claims 4 to 20.

23. The moulded article or material composite of claim 22, **characterized in that** it is used for optical components as ophthalmic lenses or sun lenses for eyeglasses, magnifying glasses, lens systems, microscopes, cameras, displays for cellular phones, lenses for cameras, measuring devices, watch-glasses or watchcases, cases for handheld telephones with or without integrated displays, or any kind of devices, and for CD's, DVD's, lenses for LED's, beam waveguides, light couplers, light amplifiers, distributors and panes for lamps and laser devices, multilayer films, composite containers, and any kinds of transparent composites.

24. The moulded article of claim 21, **characterized in that** it is used for display or screen films that subsequently can be laminated to multilayer display films.

25. The moulded article of claim 21 or 22, **characterized in that** it is used as electroluminescent film, switching elements, apertures for heating/ventilation in the automotive industry or in the field of housewares and telecommunication.

26. The moulded article of any of claims 21 to 25, **characterized in that** low haze values of ≤ 1 % at colour depths of 10 to 93 % light transmission, preferred of 10 to 80 % light transmission, particularly preferred of 10 to 60 % light transmission are achieved,
wherein a high gloss finished, unobjectionable surface of the moulded component is retained.

## Revendications

1. Bain de traitement destiné à la coloration et/ou la teinture ou le dopage de pièces moulées en (co)polyamides transparents ou translucides, ledit bain de traitement étant constitué des composants suivants :
(A) eau déminéralisée
(B) support 0,10 à 6,00 % en poids,
(C) agents tensioactifs/émulsifiant 0,001 à 1,00 % en poids,
(D) agent de surface D 0,50 à 4,00 % en poids,
(E) agent de surface E 0,01 à 3,00, notamment 0,01 à 2,00 % en poids,
(F) colorants ou agents de dopage 0,01 à 0,90 % en poids,
(G) tampon 0 à 3,00 % en poids,
et, le cas échéant,
(H) agent auxiliaire de dispersion pour colorants ou agents de dopage (F) 0 à 4,00 à base des préparation anionique composée d'esters d'amines grasses éthoxylés, d'aralkylpolyglycoléther et d'un polyalcool modifié,
la somme des quantités des composants (A) à (G) et, le cas échéant, (H) étant de 100 % en poids,
le support (B) étant constitué d'au moins un monohydroxyglycol choisi dans le groupe constitué par l'éthylèneglycolmonobutyléther et le diéthylèneglycolmonobutyléther,
l'agent de surface (D) étant constitué d'au moins un glycol choisi dans le groupe constitué par le diéthylèneglycol et le triéthylèneglycol, et
l'agent de surface (E) étant constitué d'au moins un polyalkylèneglycol répondant à la formule générale (3):
R¹-{[-O-(CH₂)ₙ]ₘ}OR²
dans laquelle R¹ et R² = H, avec n = 2 à 4 et m = 6 à 35.

2. Bain de traitement selon la revendication 1, **caractérisé en ce qu'**il contient les composants dans les quantités suivantes, exprimées en % en poids :
| | | |
|---|---|---|
| (A) | eau déminéralisée | |
| (B) | support | 1,00 à 4,00 |
| | | de préférence 1,00 à 3,00 |
| (C) | agents tensioactifs/émulsifiant | |
| | | 0,001 à 0,50 |
| | | de préférence 0,001 à 0,30 |
| (D) | agent de surface | |
| | | 0,50 à 4,00 |
| | | de préférence 1,00 à 3,00 |
| (E) | agent de surface E | |
| | | 0,05 à 1,00 |
| | | de préférence 0,05 à 0,20 |
| (F) | colorants ou agents de dopage | |
| | | 0,01 à 0,40 |
| | | de préférence 0,01 à 0,20 |
| (G) | tampon | 0 à 2,0 |
| | | |
| le cas échéant | | de préférence 0 à 1,0 |
| (H) | agent de dispersion | 0 à 3,00, de préférence 0 à 2 |

3. Bain de traitement selon l'une des revendications 1 et 2, **caractérisé en ce que** son pH est de 3,5 à 7, de préférence de 4 à 6.

4. Utilisation du bain de traitement selon l'une des revendications 1 à 3 dans un procédé pour la coloration et/ou la teinture ou le dopage de pièces moulées en (co)polyamides transparents ou translucides par immersion dans des bain aqueux et/ou des bains de traitement, ledit procédé comprenant les étapes suivantes:
(a) mise à disposition du bain d'immersion et/ou de traitement, ledit bain contenant de l'eau (A), du tampon (G), un support (B), des agents tensioactifs/émulsifiants (C), des agents de surface (D), (E) et au moins une substance choisie dans le groupe des colorants ou des agents de dopage (F), des pigments colorants, des pigments d'interférence, des additifs UV, des additifs photochromes ou thermochromes, des additifs issus du groupe des additifs améliorant les contrastes ou des additifs ayant une influence sur l'indice de réfraction, ladite substance étant mise en oeuvre en quantité suffisante pour réaliser une coloration et/ou une teinture ou un dopage, ainsi que, le cas échéant, des agents de dispersion (H) pour colorants ou agents de dopage à base d'une préparation anionique composée d'esters d'amines grasses éthoxylés, d'aralkylpolyglycoléther et d'un polyalcool modifié,
(b) chauffage du bain d'immersion et/ou de traitement pour porter sa température à une valeur comprise entre 50 et 95 °C,
(c) prétraitement de la pièce moulée dans un bain d'immersion contenant de l'eau (A), des agents tensioactifs et/ou des émulsifiants (C) afin de nettoyer la pièce moulée, chauffage du bain d'immersion pour porter sa température à une valeur comprise entre 50 et 95 °C et récupération de la pièce moulée nettoyée et mise en température en la retirant du bain d'immersion de prétraitement,
(d) immersion d'au moins une partie de la pièce moulée dans le bain de traitement, séjour d'une durée comprise entre 5 et 60 minutes de la pièce moulée dans le bain de traitement pour permettre la diffusion dans le corps moulé d'une quantité suffisante du colorant ou de l'agent de dopage (F) ou du pigment colorant ou du pigment d'interférence ainsi que d'un additif UV, d'un additif photochrome ou thermochrome ou bien d'un additif issu du groupe des additifs améliorant les contrastes et des additifs ayant une influence sur l'indice de réfraction, et
(e) retrait du corps moulé du bain de traitement et post-traitement de la pièce moulée,
(f) refroidissement de la pièce moulée,
(g) séchage de la pièce moulée,
le corps moulé contenant au moins une matière thermoplastique choisie dans le groupe des (co)polyamides transparents.

5. Utilisation selon la revendication 4, **caractérisée en ce qu'**on réalise, de façon supplémentaire et dans un bain d'eau, un post-traitement de nettoyage (e) de la pièce moulée colorée ou dopée, ledit bain d'eau contenant des agents tensioactifs, notamment du dodécylsulfonate de sodium et/ou des émulsifiants, le cas échéant par mise en oeuvre d'ultrasons, et qu'on refroidit la pièce moulée jusqu'à atteindre la température ambiante.

6. Utilisation selon l'une des revendications 4 ou 5, **caractérisée en ce qu'**on soumet la pièce moulée ayant subi l'intégralité des traitements à un autre post-traitement consistant à appliquer au moins une couche de vernis dur et/ou une couche anti-brillance et/ou une couche anti-reflets et/ou des couches hydrophobantes et/ou des couches anti-buée, ledit post-traitement étant notamment réalisé en appliquant, dans des bains ultérieurs, des couches de vernis dur pourvues ou non de sous-couches et/ou de couches anti-reflets.

7. Utilisation selon l'une des revendications 4 à 6, **caractérisée en ce que** d'autres couches fonctionnelles sont appliquées sur la pièce moulée en mettant en oeuvre des procédés de pulvérisation cathodique ou de dépôt en phase vapeur.

8. Utilisation selon la revendication 4, **caractérisée en ce que** le bain de traitement contient des agents tensioactifs/émulsifiants (C) qui sont choisis dans le groupe constitué par les agents tensioactifs ioniques, les agents tensioactifs amphotères et les agents tensioactifs non-ioniques.

9. Utilisation selon l'une quelconque des revendications 4 à 8, **caractérisée en ce que** le colorant est choisi dans le groupe des colorants de dispersion et/ou dans le groupe des colorants acides.

10. Utilisation selon l'une quelconque des revendications 4 à 9, **caractérisée en ce que** les matières moulables transparentes qui sont mise en oeuvre pour la fabrication du corps moulé contiennent déjà des additifs issus du groupe des agents stabilisants, des agents stabilisants anti-UV, des agents azurants, des agents de démoulage, des colorants, des paillettes métalliques, des charges et/ou des agents fonctionnels à l'échelle nano, des agents modificateurs de résiliences ou des charges renforçantes ou de leurs mélanges, les additifs étant préférentiellement ajoutés aux matières moulables en les incorporant dans les mélanges-maîtres correspondants.

11. Utilisation selon la revendication 10, **caractérisée en ce que** le traitement anti-UV des matières moulables destinées à la fabrication des corps moulés est réalisé en y incorporant, préalablement à la fabrication de la pièce moulée, 2 à 10 % en poids du mélange-maître correspondant.

12. Utilisation selon la revendication 11, **caractérisée en ce que** le mélange-maître mis en oeuvre est un mélange-maître à base de polymères qui se compose du matériau principal de la masse moulable destinée à la pièce moulée ainsi que de 5 à 50 % en poids d'une matière plastique supplémentaire partiellement cristalline qui est soluble dans le matériau principal et dont le point de fusion est relativement bas, notamment inférieur à la température de transition vitreuse (Tg) du composant principal.

13. Utilisation selon l'une des revendications 4 à 12 précédentes, **caractérisée en ce que** le corps moulé contient du dioxyde de titane.

14. Utilisation selon l'une des revendications 4 à 13, **caractérisée en ce qu'**en tant que polyalkylèneglycol, on met en oeuvre le polyéthylèneglycol 400.

15. Utilisation selon l'une des revendications 4 à 14, **caractérisée en ce que** la solution de teinture contient de l'éthylèneglycolmonobutyléther et/ou du diéthylèneglycolmonobutyléther dans des quantités comprise entre 0,1 et 6 % en poids, du diéthylèneglycol et/ou du triéthylèneglycol dans des quantités comprises entre 0,01 et 7 % en poids ainsi qu'au moins un polyalkylèneglycol selon la formule (3) dans des quantités comprises entre 0,01 et 3 % en poids.

16. Utilisation selon l'une quelconque des revendications 4 à 15 précédentes, **caractérisée en ce que** le bain de traitement est préparé de façon à mettre d'abord en place le composant (A) pour ensuite y ajouter les autres composants sous agitation.

17. Utilisation selon l'une des revendications 4 à 16, **caractérisée en ce que** le bain de traitement est chauffée de façon indirecte.

18. Utilisation selon l'une quelconque des revendications 4 à 17 précédentes, **caractérisée en ce qu'**en tant que pièce moulée, on utilise une pièce moulée étant en contact avec au moins une couche superficielle transparente ou translucides ou avec des feuille décoratives, des feuilles fonctionnelles ou des vernis ou caoutchoucs ou d'autres matières plastiques pour ainsi former un matériau composite.

19. Utilisation selon l'une quelconque des revendications 4 à 17, **caractérisée en ce que** la pièce moulée est une feuille monocouche coulée.

20. Utilisation selon l'une quelconque des revendications 4 à 19 précédentes, **caractérisée en ce que** les (co)polyamides transparents sont soit réalisés à partir polyamides amorphes ou micro-cristallins soit constitués d'un mélange transparent de ces derniers soit constitués d'un mélange homogène avec un ou plusieurs polyamides partiellement cristallins issus du groupe constitué par le polyamide 12, le polyamide 11, le polyamide 6, le polyamide 1212 et le polyamide 612 et qu'ils ont notamment la composition suivante: PA 61, PA 6I/6T, PA MXDI/6I, PA MXDI/MXDT/6I/6T, PA MXDI/12I, PA MACMI/12, PA MACMI/MACMT/12, 6I/MACMI/12, PA 6I/6T/MACMI/MACMT/12, PA PACM6/11, PA PACM12, PA PACMI/PACM12, PA MACM6/11, PA MACM12, PA MACMI/MACM12, PA MACM12/PACM12, PA 6I/6T/PACMI/PACMT/PACM12/612.

21. Pièce moulée colorée et/ou teintée ou dopée, pouvant être fabriquée selon le procédé selon l'une quelconque ou plusieurs des revendications 4 à 20 précédentes.

22. Pièce moulée selon la revendication 21, **caractérisée en ce qu'**elle est en contact avec au moins une couche superficielle transparente ou translucide et/ou avec des feuilles décoratives, des feuilles fonctionnelles ou des vernis ou des matières plastiques ou d'autres matières plastiques pour ainsi former un matériau composite, ce dernier ayant été coloré et/ou teinté ou dopé selon l'une des revendications 4 à 20.

23. Pièce moulée ou matériau composite selon la revendication 22, **caractérisé en ce qu'**elle ou qu'il est utilisé(e) pour des pièces optiques telles que les lentilles ophtalmiques ou les lentilles de soleil destinées à des lunettes, des loupes, des systèmes de lentilles, des microscopes, des caméras, des écrans d'affichage pour téléphones mobiles, des lentilles de caméra, des instruments de mesure, des verres de montre odes des boîtiers d'horloge, des boîtiers pour téléphones portables avec ou sans écrans d'affichage intégrés ou pour des appareils de tout type ainsi que pour des CD, des DVD, des lentilles pour diodes lumineuses, des conducteurs optiques, des systèmes de couplage et d'amplification lumineux, des diffuseurs et vitres pour lampes et pour appareils laser, des feuilles composites, des récipients en matériau composite et pour des systèmes composites transparents de tout type.

24. Pièce moulée selon la revendication 21, **caractérisée en ce qu'**elle est utilisée pour des feuilles d'affichage et d'écran pouvant ensuite être laminées pour former des feuilles d'affichage multicouches.

25. Pièce moulée selon la revendication 21 ou 22, **caractérisée en ce qu'**elle est utilisée en tant que feuille électroluminescente pour des éléments de commutation et des caches de chauffage/d'aération destinés à l'industrie automobile ou bien pour des appareils ménagers et de télécommunication.

26. Pièce moulée selon l'une des revendications 21 à 25, **caractérisée en ce qu'**elle atteint de faibles valeurs d'opacité de 1% alors que la profondeur des couleurs correspond à une transmission lumineuse de 10 à 93 %, préférentiellement de 10 à 80 % et, avec une préférence particulière, de 10 à 60 %, la surface de la pièce moulée restant très brillante et sans défauts.
